# EUROPÄISCHE PATENTSCHRIFT

(11) **EP 1 636 462 B1**
(45) Veröffentlichungstag und Bekanntmachung des Hinweises auf die Patenterteilung: **11.10.2006**
(21) Anmeldenummer: 04739414.3
(22) Anmeldetag: 27.05.2004
(51) Int. Cl.: F01D 5/14, F01D 5/12

(54) **SCHAUFEL UND GASTURBINE**
BLADE AND GAS TURBINE
TURBINE A GAZ ET AUBE

(30) Priorität: 18.06.2003 EP 03013857
(43) Veröffentlichungstag der Anmeldung: 22.03.2006
(73) Patentinhaber: SIEMENS AKTIENGESELLSCHAFT, 80333 München (DE)
(72) Erfinder: BUCHAL, Tobias, 40489 Düsseldorf (DE); DANKERT, Michael, 63069 Offenbach (DE); AHMAD, Fathi, 41564 Kaarst (DE); SCHEURLEN, Michael, Orlando, Florida 32826 (US); LANG, Gernot, 52499 Baesweiler (DE)
(86) Internationale Anmeldenummer: PCT/EP2004/005753
(87) Internationale Veröffentlichungsnummer: WO 2004/111392

(56) Entgegenhaltungen:
- GB-A- 2 062 120
- PATENT ABSTRACTS OF JAPAN Bd. 0082, Nr. 44 (M-337), 9. November 1984 (1984-11-09) & JP 59 122703 A (MITSUBISHI JUKOGYO KK), 16. Juli 1984 (1984-07-16)

## Beschreibung

Die Erfindung bezieht sich auf eine Schaufel zum Einsatz in Strömungsmaschinen mit einem Schaufelfuß, einem Plattformbereich und einem Schaufelblatt, welches Schaufelblatt von einer Schaufelvorderkante zu einer Schaufelhinterkante eine Schaufellänge sowie von dem Plattformbereich zu einer Schaufelblattspitze eine Schaufelhöhe aufweist und welches aus zumindest einem Grundkörpersegment und im Bereich mindestens einer der beiden Schaufelkanten aus zumindest einem mit dem Grundkörpersegment formschlüssig verbundenen Kantensegment gebildet wird.

Eine dementsprechende, modular aufgebaute Turbinenschaufel ist aus der US 4,786,234 bekannt. Das darin offengelegte Schaufelblatt setzt sich aus mehreren Komponenten bzw. Segmenten zusammen. Dabei sind die unterschiedlichen Segmente über die Schaufelhöhe unterteilt. In einer Variante zeigt die US 4,786,234 ein in Richtung der Schaufellänge unterteiltes Schaufelblatt, wobei insbesondere die Anströmkante und die Abströmkante des Schaufelblatts als separates, radial verschiebliches Bauteil ausgebildet ist.

Um z.B. die zuletzt beschriebene Ausführung der US 4,786,234 auf eine Leitschaufel mit einem Grundkörpersegment und zwei angegossenen Plattformen anzuwenden, muss mindestens eine der beiden Plattformen eine Öffnung aufweisen, durch die die radial verschiebliche Schaufelkante auf das Schaufelblatt geschoben werden kann. Für diesen Fall sind besondere konstruktive Maßnahmen, wie. z.B. Dichtungsmaßnahmen im Übergangbereich zwischen Schaufelblatt und Plattform, erforderlich, welche nachteilig für die Herstellung und für den Betrieb sind.

Ferner offenbart die JP 59 122 703 eine Turbinenschaufel mit einem sich aus drei Segmenten zusammensetzenden Schaufelblatt. Die entlang der Längserstreckung des Schaufelblatts aufeinander folgenden Segmente sind jeweils über eine schwalbenschwanzförmige oder tannenbaumförmige Verhakung miteinander verbunden und gehen so ineinander über.

Außerdem zeigt GB 2 062 120 eine aus mehreren Modulen zusammensetzbare Verdichterschaufel.

Der Erfindung liegt daher die Aufgabe zugrunde, eine alternative und vereinfachte Konstruktion einer modularen Schaufel bei gleichzeitiger Erhöhung der Lebensdauer anzugeben. Ferner ist es Aufgabe der Erfindung, eine Strömungsmaschine mit verminderten Wartungs- und Herstellungskosten anzugeben.

Die auf die Schaufel gerichtete Aufgabe wird durch die Merkmale des Anspruchs 1 und die letztgenannte Aufgabe durch die Merkmale des Anspruchs 14 gelöst. Vorteilhafte Ausgestaltungen sind in den Unteransprüchen angegeben.

Zur Lösung wird vorgeschlagen, dass die formschlüssige Verbindung über an einem der Segmente angeformte, in Richtung der Schaufelhöhe zueinander beabstandete Vorsprünge hergestellt ist, zwischen denen mindestens teilweise das andere Segment hineinragend angeordnet ist.

Diese Verbindung ermöglicht eine besonders einfache Montage der Schaufelhinterkante bzw. der Schaufelvorderkante, da die Kantensegmente quer zur Schaufelkante verschiebbar ausgebildet sind. Daher kann bei der erfindungsgemäßen Schaufel der Austausch des Kantensegmentes ohne die Demontage der Schaufel erfolgen, was zu einer Verkürzung der Reparaturdauer führt. Ferner können durch den modularen Aufbau gezielt die höher beanspruchten und dementsprechend anfälligeren Schaufelkanten des Schaufelblatts ausgetauscht werden. Dieses erhöht die Einsatzdauer des Grundkörpersegments, welches geringerem Verschleiß unterworfen ist. Des weiteren können die austauschbaren Bereiche gezielt auf die mechanischen und thermischen Anforderungen angepasst werden, welches zur Kosteneinsparung führt.

Ferner lassen sich durch die Segmentierung Standardsegmente für die einzelnen Schaufelgrößen herstellen, wodurch bezogen auf den Einsatz und den Verschleiß die Kosten durch Standardisierung weiter gesenkt werden können. Dabei ist es vorteilhaft, wenn die Segmente unterschiedliche Dimensionierungen aufweisen, so dass die Bereiche der einzelnen Verschleißstärken optimal zusammengefasst werden können. Die Verbindung kann durch Presspassung, Löten, Schweißen, Kleben oder Stiftverbindungen erfolgen. Vorteilhafterweise sind dabei die Segmentverbindungsflächen horizontal und/oder vertikal ausgerichtet.

In einer vorteilhaften Ausgestaltung lässt sich eine besonders wirksame Verbindung erzielen, wenn das Grundkörpersegment und das Kantensegment jeweils mehrere Vorsprünge und dazwischenliegende Ausnehmungen aufweist. Unter Bildung einer formschlüssigen Verzahnung können dann die an einem der beiden Segmente angeordneten Vorsprünge in die gegenüberliegenden Ausnehmungen des anderen Segments formschlüssig hineinragen. Hierdurch ist eine sichere Befestigung der Schaufelkanten insbesondere bei Laufschaufeln möglich, da die in Radialrichtung auf die Kantensegmente beim Betrieb wirkenden Fliehkräfte durch eine quer dazu verlaufende Segmentverbindungsfläche von dem Grundkörpersegment kompensiert werden können.

Gemäß einer besonders vorteilhaften Ausgestaltung sichert ein in Richtung der Schaufelkante verlaufender Haltestift die Segmente gegen Relativbewegungen, indem dieser die Vorsprünge beider Segmente quer durchdringt. Durch die Verzahnung der Vorsprünge ergeben sich überlappende, ineinandergreifende Bereiche, durch die eine fluchtende Bohrung sich erstrecken kann, in welcher der Haltestift eingesetzt ist.

Eine weitere, vorteilhafte Ausgestaltung sieht vor, dass die das Schaufelblatt formenden Segmente aus unterschiedlichen Werkstoffen hergestellt sind. Dieses ist vorteilhaft, da Bereiche vorhanden sind, die stärker mechanischer Beanspruchung ausgesetzt sind und Bereiche, die stärker thermischen Beanspruchungen ausgesetzt sind, so dass durch die verschiedenen Werkstoffe das Schaufelblatt in seinem segmentierten Aufbau optimal an die einzelnen Verschleißbedingungen angepasst werden kann. Dabei kann gemäß einer weiteren Lehre der Erfindung ein Teil der Segmente aus einem besonders wärmeleitfähigen Werkstoff und ein weiterer Teil aus einem hochtemperaturbeständigen Werkstoff hergestellt sein.

Als Materialien kommen dabei Keramikmaterial, Metalle, Metalllegierungen und Kunststoffmaterialien in Frage. Zusätzlich sieht eine weitere Lehre der Erfindung vor, dass die Segmente beschichtet sind. Dadurch lassen sich gezielt die Eigenschaften der Segmente weiter beeinflussen.

Zur Reduktion von Gewicht können die Segmente Hohlräume aufweisen. Diese Hohlräume können dabei mit einem Material aufgefüllt werden, das von dem Segmentwerkstoff unterschiedlich ist. Hierbei kann es sich beispielsweise um Schäume handeln. Auf diese Weise lassen sich gezielt Festigkeitseigenschaften der Segmente beeinflussen.

Zweckmäßigerweise ist die Schaufel als eine Leitschaufel oder als eine Laufschaufel ausgebildet. Besonders vorteilhaft ist der Einsatz einer solchen Schaufel in einer Gasturbine.

Weitere Merkmale und Vorteile der Erfindung ergeben sich aus der nachfolgenden Beschreibung der zugehörigen Zeichnung, in der ein Ausführungsbeispiel einer modularen Schaufelkante eines Schaufelblattes für eine Strömungsmaschine schematisch dargestellt ist. In der Zeichnung zeigt:
- Fig. 1: eine perspektivische Ansicht einer erfindungsgemäßen Schaufel mit einem Hinterkantensegment,
- Fig. 2: eine schematische Teilschnittansicht einer erfindungsgemäßen Schaufel mit einem Hinterkantensegment,
- Fig. 3: eine schematische Seitenansicht einer Schaufel mit einem alternativen Hinterkantensegment,
- Fig. 4: eine perspektivische Ansicht einer erfindungsgemäßen Schaufel mit einem Vorderkantensegment und
- Fig. 5: eine schematische Teilschnittansicht einer erfindungsgemäßen Schaufel mit einem Vorderkantensegment

Strömungsmaschinen verwenden zur Umwandlung von Strömungsenergie in Rotationsenergie und umgekehrt Schaufelstufen, die aus benachbart angeordneten Lauf- und Leitschaufeln bestehen. Die Leitschaufeln sind dabei am Gehäuse der Maschine angebracht, während die Laufschaufeln in direkter Verbindung mit dem Rotor sind.

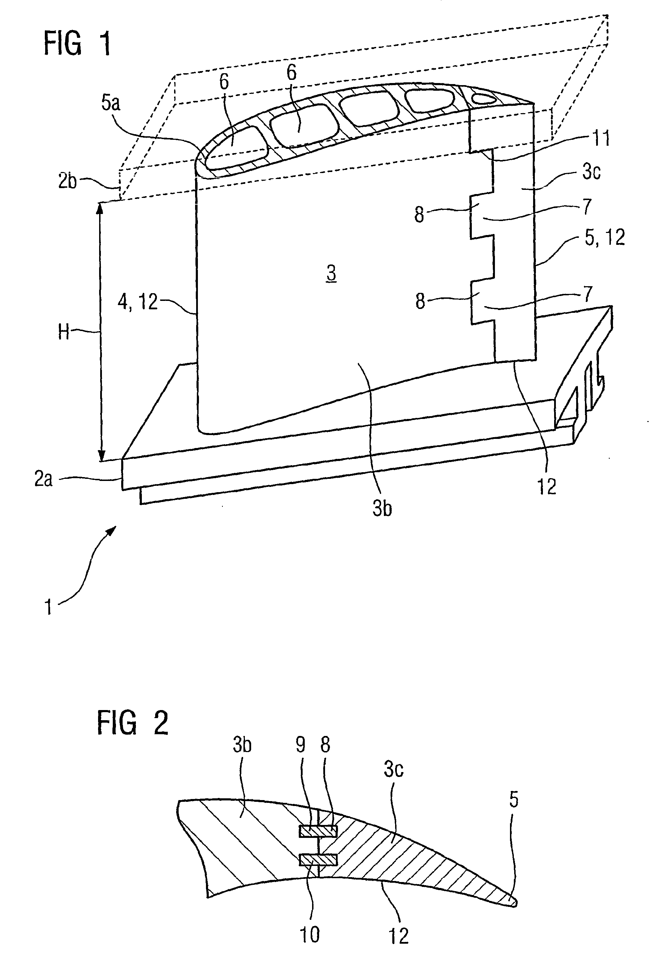

Eine erfindungsgemäße Schaufel 1 mit einer segmentierten Hinterkante in den Fig. 1 bis 3 dargestellt. Die Schaufel 1 selbst weist eine Plattform 2a und ein Schaufelblatt 3 mit einer Schaufelvorderkante 4 und einer Schaufelhinterkante 5 auf. Eine zweite Plattform 2b, welche an dem oberen Ende 5a des Schaufelblatts 3 angeformt ist, ist in gestrichelter Linienart dargestellt. Das Schaufelblatt 3 setzt sich aus einem Grundkörpersegment 3b und einem Hinterkantensegment 3c zusammen. Wie an dem oberen Ende 5a des Schaufelblatts 3 erkennbar ist, weist das Grundkörpersegment 3b mehrere Hohlräume 6 auf. Diese dienen bei hinreichender Festigkeit zur Reduzierung der Schaufelmasse, um die mechanischen und thermischen Belastungen im Betrieb zu verringern. Dabei können ein oder mehrere Hohlräume 6 mit einem Schaum ausgefüllt werden, um die Festigkeit des Schaufelblatts 3 zu erhöhen.

Das Hinterkantensegment 3c weist im Bereich der Schaufelhinterkante 5 über die Schaufelhöhe H beabstandete Vorsprünge 7 auf, welche in am Grundkörpersegment 3b gegenüberliegende Ausnehmungen 8 formschlüssig eingreifen, so dass beide Segmente 3b, 3c miteinander formschlüssig verzahnt sind. Die Vorsprünge 7 und die Ausnehmungen 8 erstrecken sich lediglich über einen Teil der Schaufelhöhe. Eine dauerhafte Verbindung kann durch eine Presspassung oder nach der Montage durch Löten oder Schweißen hergestellt sein. Diese Anordnung kann auch gegebenenfalls für Laufschaufeln geeignet sein, da eine quer zur Fliehkraft gerichtete Segmentverbindungsfläche 11 für das montierbare Hinterkantensegment 3c vorhanden ist, welche als Gegenlager für die auf das Hinterkantensegment 3c im Betrieb wirkenden Fliehkräfte dient.

In Fig. 2 ist eine Stiftverbindung zwischen dem Hinterkantensegment 3c und dem Grundkörpersegment 3b im Teilschnitt dargestellt. Im Grundkörpersegment 3b sind Ausnehmungen 8 vorgesehen, die der im Hinterkantensegment 3c angeordneten weiteren Ausnehmungen 9 gegenüberliegen und in denen jeweils ein stiftförmiges Haltesegment 10 hineinragt. Zur Montage werden die Haltesegmente 10 z.B. als Presspassung in das Hinterkantensegment 3c eingesetzt und anschließend auf das Grundkörpersegment 3b durch eine quer zur Schaufelhinterkante 5 gerichtete Verschiebung gleichartig befestigt.

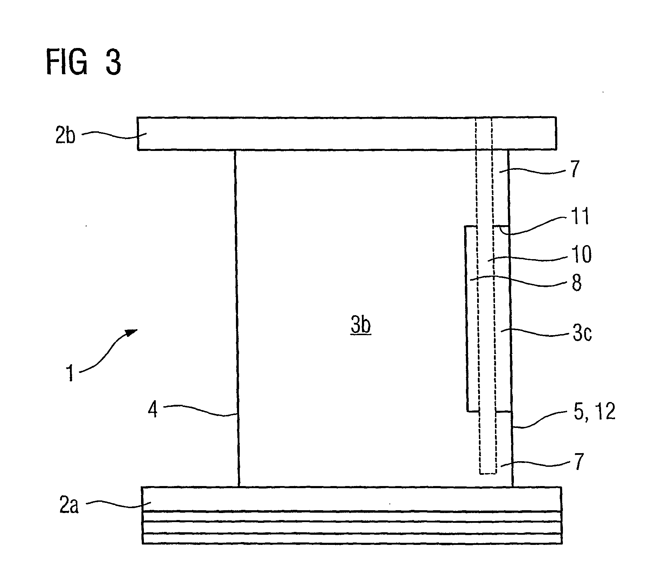

Fig. 3 zeigt eine alternativ ausgestaltete Leitschaufel für eine Turbine mit zwei jeweils am Ende des Schaufelblatts 3 angeordneten Plattformen 2a, 2b. An der Schaufelhinterkante 5 ist ein Teil des Schaufelblattes 3 als austauschbares Hinterkantensegment 3c ausgebildet. Das Grundkörpersegment 3b der Schaufel 1 weist eine Ausnehmung 8 zwischen zwei Vorsprüngen 7 auf, in der das Hinterkantensegment 3c vollständig eingesetzt ist. Die Vorsprünge 7 sowie das Hinterkantensegment 3c werden zur dessen Befestigung und/oder zur Sicherung von einem stiftartige Halteelement 10 in Richtung der Schaufelhinterkante 5 durchdrungen, welches von der Rückseite der Plattform 2b einbringbar und anschließend mit der Plattform 2b verschweißbar ist. Hierdurch kann die Plattform 2b im Bereich der Schaufelhinterkante 5 in das Grundkörpersegment 3b als Vorsprung 7 übergehen, so dass in diesem Übergangsbereich eine aufwändige Konstruktion vermieden und z.B. auf ein Dichtmittel verzichtet werden kann. Selbstverständlich ist eine derartige Konstruktion auch für hochbelastete Schaufelvorderkanten 4 einer Schaufel 1 anwendbar. Ferner können beide Schaufelkanten 12 der Schaufel 1 gleichzeitig segmentiert ausgebildet sein.

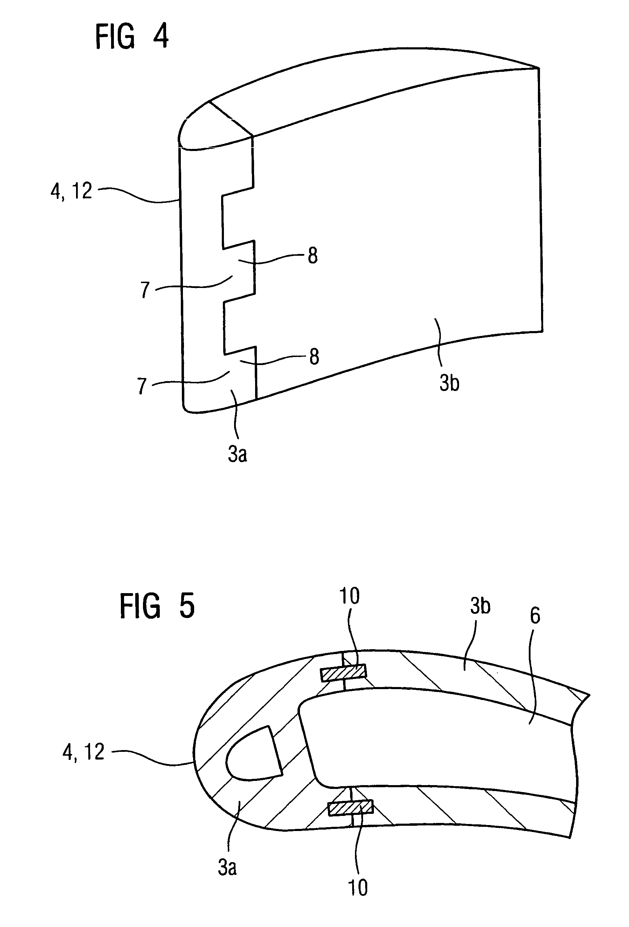

Ähnlich zu Fig. 1 und 2 ist in Fig. 4 und 5 der segmentartige Aufbau der Schaufelvorderkante 4 in Bezug auf das Schaufelblatt 3 dargestellt. Dabei ist die Verbindung zwischen einem Vorderkantensegment 3a und dem Grundkörpersegment 3b in Fig. 4 mittels einer von Vorsprüngen 7 und Ausnehmungen 8 gebildeten Verzahnung und in Fig. 5 mittels einer Stiftverbindung mit stiftförmigen Haltesegmenten 10 hergestellt.

Durch die Aufteilung der Schaufel in mehrere Komponenten kann die Gussgenauigkeit reduziert werden, was zu einer Kostensenkung beiträgt. Ferner kann bei der Wiederaufarbeitung der Leitschaufel nur die verschlissene Kante ersetzt werden.

Besonders vorteilhaft sind die Segmente aus unterschiedlichen Materialen mit verschiedenen Festigkeits- und Wärmeleiteigenschaften ausgebildet, um die Schaufel auf die lokalen Erfordernisse kostengünstig anzupassen.

## Patentansprüche

1. Schaufel (1) zum Einsatz in Strömungsmaschinen,
mit einem Schaufelfuß, einem Plattformbereich und einem Schaufelblatt (3),
welches Schaufelblatt (3) von einer Schaufelvorderkante (4) zu einer Schaufelhinterkante (5) eine Schaufellänge sowie vom Plattformbereich zu einer Schaufelblattspitze eine Schaufelhöhe aufweist und
welches aus zumindest einem Grundkörpersegment (3b) und im Bereich mindestens einer der beiden Schaufelkanten (4, 5, 12) aus zumindest einem mit dem Grundkörpersegment (3b) formschlüssig verbundenen Kantensegment (3a, 3c) gebildet wird,
**dadurch gekennzeichnet,**
**dass** die formschlüssige Verbindung über an einem der Segmente (3a, 3b, 3c) angeformte in Richtung der Schaufelhöhe beabstandete Vorsprünge (7) hergestellt ist, zwischen denen mindestens teilweise das andere Segment (3a, 3b, 3c) hineinragend angeordnet ist.

2. Schaufel (1) nach Anspruch 1,
**dadurch gekennzeichnet,**
**dass** das Grundkörpersegment (3b) und das Kantensegment (3a, 3c) jeweils mehrere Vorsprünge (7) und dazwischenliegende Ausnehmungen (8) aufweist und
**dass** unter Bildung einer formschlüssigen Verzahnung die an einem der beiden Segmente (3a, 3b, 3c) angeordneten Vorsprünge (7) in die gegenüberliegenden Ausnehmungen (8) des anderen Segments (3a, 3b, 3c) formschlüssig hineinragen.

3. Schaufel (1) nach Anspruch 1 oder 2,
**dadurch gekennzeichnet,**
**dass** ein in Richtung der Schaufelkante (4, 5, 12) verlaufendes stiftförmiges Halteelement die Segmente (3a, 3b, 3c) gegen Relativbewegungen sichert, indem dieses die Vorsprünge (7) beider Segmente (3a, 3b, 3c) quer durchdringt.

4. Schaufel (1) nach einem der Ansprüche 1 bis 3,
**dadurch gekennzeichnet,**
**dass** die Segmente (3a, 3b, 3c) aus unterschiedlichen Werkstoffen hergestellt sind.

5. Schaufel (1) nach einem der Ansprüche 1 bis 4,
**dadurch gekennzeichnet,**
**dass** mindestens ein Segment (3a, 3b, 3c) aus einem besonders wärmeleitfähigen Werkstoff hergestellt ist.

6. Schaufel (1) nach einem der Ansprüche 1 bis 5,
**dadurch gekennzeichnet,**
**dass** mindestens ein Segment (3a, 3b, 3c) aus einem hochtemperaturbeständigen Werkstoff hergestellt ist.

7. Schaufel (1) nach einem der Ansprüche 1 bis 6,
**dadurch gekennzeichnet,**
**dass** mindestens ein Segment (3a, 3b, 3c) aus einem Keramikmaterial hergestellt ist.

8. Schaufel (1) nach einem der Ansprüche 1 bis 7,
**dadurch gekennzeichnet,**
**dass** mindestens ein Segment (3a, 3b, 3c) aus einem Metall und/oder aus einer Metalllegierung hergestellt ist.

9. Schaufel (1) nach einem der Ansprüche 1 bis 8,
**dadurch gekennzeichnet,**
**dass** mindestens ein Segment (3a, 3b, 3c) aus einem Kunststoffmaterial hergestellt ist.

10. Schaufel (1) nach einem der Ansprüche 1 bis 9,
**dadurch gekennzeichnet,**
**dass** die Segmente (3a, 3b, 3c) beschichtet sind.

11. Schaufel (1) nach einem der Ansprüche 1 bis 10,
**dadurch gekennzeichnet,**
**dass** mindestens ein Segment (3a, 3b, 3c) einen Hohlraum aufweist.

12. Schaufel (1) nach Anspruch 11,
**dadurch gekennzeichnet,**
**dass** der Hohlraum (6) mit einem vom Segmentmaterial unterschiedlichen Werkstoff aufgefüllt ist.

13. Schaufel (1) nach einem der Ansprüche 1 bis 12,
**dadurch gekennzeichnet,**
**dass** die Schaufel als Leitschaufel oder als Laufschaufel ausgebildet ist.

14. Gasturbine mit einer Schaufel nach einem der Ansprüche 1 bis 13.

## Claims

1. Blade (1) for use in turbomachines, having a blade root, a platform region and a main blade part (3),
which main blade part (3) has a blade length from a blade leading edge (4) to a blade trailing edge (5) and a blade height from the platform region to a main blade part tip, and
which is formed from at least one base body segment (3b) and, in the region of at least one of the two blade edges (4, 5, 12), from at least one edge segment (3a, 3c) which is connected in a positively locking manner to the base body segment (3b),
**characterized**
**in that** the positively locking connection is produced by means of projections (7) which are formed integrally on one of the segments (3a, 3b, 3c) and are spaced apart from one another in the direction of the blade height, with the other segment (3a, 3b, 3c) at least partially arranged projecting in between the projections (7).

2. Blade (1) according to Claim 1,
**characterized**
**in that** the base body segment (3b) and the edge segment (3a, 3c) each have a plurality of projections (7) with recesses (8) between them, and in that the projections (7) arranged on one of the two segments (3a, 3b, 3c) project in a positively locking manner into the opposite recesses (8) in the other segment (3a, 3b, 3c), forming positively locking toothing.

3. Blade (1) according to Claim 1 or 2,
**characterized**
**in that** a pin-like holding element which runs in the direction of the blade edge (4, 5, 12) secures the segments (3a, 3b, 3c) against relative movements by virtue of this holding element penetrating transversely through the projections (7) of both segments (3a, 3b, 3c).

4. Blade (1) according to one of Claims 1 to 3,
**characterized**
**in that** the segments (3a, 3b, 3c) are made from different materials.

5. Blade (1) according to one of Claims 1 to 4,
**characterized**
**in that** at least one segment (3a, 3b, 3c) is made from a particularly thermally conductive material.

6. Blade (1) according to one of Claims 1 to 5,
**characterized**
**in that** at least one segment (3a, 3b, 3c) is made from a material which is resistant to high temperatures.

7. Blade (1) according to one of Claims 1 to 6,
**characterized**
**in that** at least one segment (3a, 3b, 3c) is made from a ceramic material.

8. Blade (1) according to one of Claims 1 to 7,
**characterized**
**in that** at least one segment (3a, 3b, 3c) is made from a metal and/or a metal alloy.

9. Blade (1) according to one of Claims 1 to 8,
**characterized**
**in that** at least one segment (3a, 3b, 3c) is made from a plastics material.

10. Blade (1) according to one of Claims 1 to 9,
**characterized**
**in that** the segments (3a, 3b, 3c) are coated.

11. Blade (1) according to one of Claims 1 to 10,
**characterized**
**in that** at least one segment (3a, 3b, 3c) has a cavity.

12. Blade (1) according to Claim 11,
**characterized**
**in that** the cavity (6) is filled with a material that is different from the segment material.

13. Blade (1) according to one of Claims 1 to 12,
**characterized**
**in that** the blade is designed as a guide vane or as a rotor blade.

14. Gas turbine having the blade according to one of Claims 1 to 13.

## Revendications

1. Aube (1) à l'utiliser dans des turbomachines, ayant une emplanture d'aube, une zone de plate-forme et une lame (3),
laquelle lame (3) a une longueur d'aube, entre un bord antérieur d'aube (4) et un bord postérieur d'aube (5) ainsi qu'une hauteur d'aube, d'une zone de plate-forme à une pointe de lame et
laquelle est formée d'au moins un segment de corps de base (3b) et dans la zone d'au moins l'un des deux bords d'aube (4, 5, 12), d'au moins un segment de bord (3a, 3c), relié par complémentarité de forme au segment de corps de base (3b),
**caractérisée en ce que** la liaison par complémentarité de forme est réalisée par l'intermédiaire de saillies (7) issues d'une pièce de l'un des segments (3a, 3b, 3c), espacées dans la direction de la hauteur d'aube, entre lesquelles l'autre segment (3a, 3b, 3c) est disposé au moins partiellement de façon à pénétrer à l'intérieur.

2. Aube (1) selon la revendication 1,
**caractérisée en ce que** le segment de corps de base (3b) et le segment de bord (3a, 3c) comportent chacun plusieurs saillies (7) et des creux (8) intercalés et **en ce que** les saillies (7) disposées sur l'un des deux segments (3a, 3b, 3c) pénètrent dans les creux opposés (8) de l'autre segment (3a, 3b, 3c), en formant un endentement par complémentarité de forme.

3. Aube (1) selon la revendication 1 ou 2,
**caractérisée en ce qu'**un élément de maintien en forme de tige s'étendant en direction du bord de l'aube (4, 5, 12) empêche les segments (3a, 3b, 3c) de se déplacer l'un par rapport à l'autre en traversant transversalement les saillies (7) des deux segments (3a, 3b, 3c).

4. Aube (1) selon l'une quelconque des revendications 1 à 3, **caractérisée en ce que** les segments (3a, 3b, 3c) sont fabriqués en différents matériaux.

5. Aube (1) selon l'une quelconque des revendications 1 à 4, **caractérisée en ce qu'**au moins un segment (3a, 3b, 3c) est fabriqué en un matériau particulièrement thermoconducteur.

6. Aube (1) selon l'une quelconque des revendications 1 à 5, **caractérisée en ce qu'**au moins un segment (3a, 3b, 3c) est fabriqué en un matériau à haute résistance thermique.

7. Aube (1) selon l'une quelconque des revendications 1 à 6, **caractérisée en ce qu'**au moins un segment (3a, 3b, 3c) est fabriqué en une matière céramique.

8. Aube (1) selon l'une quelconque des revendications 1 à 7, **caractérisée en ce qu'**au moins un segment (3a, 3b, 3c) est fabriqué en un métal et/ou en un alliage métallique.

9. Aube (1) selon l'une quelconque des revendications 1 à 8, **caractérisé en ce qu'**au moins un segment (3a, 3b, 3c) est fabriqué en une matière plastique.

10. Aube (1) selon l'une quelconque des revendications 1 à 9, **caractérisée en ce que** les segments (3a, 3b, 3c) sont revêtus.

11. Aube (1) selon l'une quelconque des revendications 1 à 10, **caractérisée en ce qu'**au moins un segment (3a, 3b, 3c) comporte une cavité.

12. Aube (1) selon la revendication 11, **caractérisé en ce que** la cavité (6) est remplie d'un matériau différent du matériau du segment.

13. Aube (1) selon l'une quelconque des revendications 1 à 12,
**caractérisée en ce que** l'aube est conçue sous la forme d'une aube directrice ou d'une aube mobile.

14. Turbine à gaz ayant une aube selon l'une quelconque des revendications 1 à 13.
